# EUROPÄISCHE PATENTSCHRIFT

(11) **EP 1 131 564 B1**
(45) Veröffentlichungstag und Bekanntmachung des Hinweises auf die Patenterteilung: **12.05.2004**
(21) Anmeldenummer: 00949326.3
(22) Anmeldetag: 13.07.2000
(51) Int. Cl.: F16B 37/00

(54) **SCHRAUBVERBINDUNG**
SCREW CONNECTION
ASSEMBLAGE PAR VIS

(30) Priorität: 16.09.1999 DE 19944589
(43) Veröffentlichungstag der Anmeldung: 12.09.2001
(73) Patentinhaber: EJOT VERBINDUNGSTECHNIK GmbH & Co. KG, 57334 Bad Laasphe (DE)
(72) Erfinder: BRETSCHNEIDER, Bernd, D-57334 Bad Laasphe (DE); FRIEDERICH, Heinrich, D-68649 Gross-Rohrheim (DE); SCHMOOCK, Reinhard, D-57250 Netphen (DE)
(74) Vertreter: Eisenführ, Speiser & Partner
(86) Internationale Anmeldenummer: PCT/EP2000/006667
(87) Internationale Veröffentlichungsnummer: WO 2001/020176

(56) Entgegenhaltungen:
- EP-A- 0 645 153
- EP-A- 0 703 372
- US-A- 2 167 558
- US-B1- 5 082 405
- "MECHANICAL FASTENERS FOR ALUMINIUM" DESIGN ENGINEERING,GB,MORGAN-GRAMPIAN LTD. LONDON, 1. Oktober 1993 (1993-10-01), Seite 13 XP000396582 ISSN: 0308-8448

## Beschreibung

Die Erfindung betrifft eine Schraubverbindung insbesondere für Kunststoffteile, bestehend aus einer Schraube und einem Einsatz, der in einen der Verbindungspartner verdrehsicher einzubringen ist und in einem axialen Durchlaß das Gewinde der Schraube aufnimmt (US 5 082 405 A).

Bekannt sind derartige Schraubverbindungen in Form sogenannter Mikroverschraubungen für kleine und namentlich dünnwandige Kunststoffteile. Weil diese den beim Eindrehen das Gegengewinde selbstfurchender Schrauben auftretenden Kräften häufig nicht gewachsen sind, werden im Stand der Technik Einsätze verwendet, welche beim Spritzgießen des Kunststoffbauteils umspritzt (Inlays) oder nachträglich warm in das (thermoplastische) Kunststoffteil bzw. mittels Ultraschall eingebettet werden (Inserts). Diese bekannten Einsätze bestehen aus Messing und werden als Drehteile mit Innengewinde im Durchlaß sowie einer äußeren Rändelung o. dgl. zwecks Erhöhung der Verdrehsicherheit im Einbettungszustand hergestellt. Als Schraube wird eine metrische Stahlschraube verwendet. Diese bekannte Schraubverbindung erfordert nicht nur relativ hohe Herstellkosten, sondern hat auch ein hohes Gewicht, was in manchen Verwendungsfällen unerwünscht ist, beispielsweise bei Mobiltelefonen. Darüber hinaus verringern die erforderlichen Toleranzen vorgeschnittener Gewinde die Sicherheit der Schraubverbindung gegen selbsttätiges Lösen vor allem bei dynamischer Beanspruchung; hinzu kommt der Verlust an Vorspannkraft infolge Temperaturwechsels wegen der unterschiedlichen Wärmeausdehnungskoeffizienten der beteiligten Werkstoffe.

Der Erfindung liegt die Aufgabe zugrunde, namentlich für Einsatzzwecke der vorstehend angesprochenen Art eine billiger herstellbare und zugleich betriebssichere Schraubverbindung bereitzustellen.

Die Erfindung besteht - ausgehend vom eingangs angegebenen Stand der Technik - darin, daß der Einsatz aus deiner Aluminiumlegierung besteht, daß der axiale Durchlaß des Einsatzes glattwandig (gewindefrei) ausgebildet ist, daß auch die Schraube aus einer Aluminiumlegierung besteht, die eine wesentlich größere Härte als die Legierung des Einsatzes hat, und daß die Schraube ein das Innengewinde des Einsatzes selbstfurchendes bzw. selbstschneidendes Gewinde aufweist. Ein solcher Einsatz läßt sich wesentlich einfacher und billiger als ein Drehteil, nämlich beispielsweise durch Fließpressen herstellen, ist andererseits aber in der Lage, den Kräften zu widerstehen, die beim Furchen bzw. Schneiden des Innengewindes im Durchlaß mit Hilfe der entsprechend ausgebildeten Schraube auftretend, ohne daß das den Einsatz aufnehmende Kunststoffbauteil beschädigt wird.

Darin liegt auch die Besonderheit der vorliegenden Verwendung solcher, an sich umfangreich bekannter Schrauben, welche aufgrund ihrer entsprechenden Ausbildung das Gegengewinde im Verbindungspartner selber furchen oder schneiden. Bislang wurden solche Schrauben nur dort eingesetzt, wo es keines speziellen, zusätzlichen Verbindungspartner-Bauteils bedarf, sondem die Schraube unmittelbar (nach Vorbohrung) in das zu befestigende Bauteil oder ein dieses haltendes Bauteil eingeschraubt wird, wie dies beispielsweise die US-A-2 167 558 zeigt, (etwa eine Mutter).

Bekannt ist aus der EP 0 645 153 A1 auch die Verbindung zweier Bauteile aus Kunststoff oder Metall (u.a. Aluminium) wie der Kolbenstange einer Spritze mit dem Kolben dadurch, daß ein gewindefreies rohrförmiges Ende der Kolbenstange auf einen Gewindezapfen am Kolben geschraubt wird, wobei der Gewindezapfen im duktileren Material des Gegenstücks das Gegengewinde erzeugt.

Neben der Gewichtsersparnis gegenüber der oben beschriebenen konventionellen Paarung um einen Faktor 3 sowie einer hohen Selbsthemmung der Gewindepaarung aufgrund des spielfreien Sitzes bringt die Aluminiumpaarung den zusätzlichen Vorteil eines geringen Vorspannkraftverlustes bei thermischer Wechsellast (geringe Relaxation), weil die Wärmeausdehnungskoeffizienten der Verbindungspartner ähnlich sind; außerdem handelt es sich um antimagnetische Verbindungsteile. Ferner ist eine Kontaktkorrosion ausgeschlossen.

Der Durchmesser des gewindefreien Durchlasses muß über dessen axiale Länge nicht gleich bleiben, sondern kann sich von einem zum anderen Ende verjüngen. Ferner kann eine vom Kreis abweichende Querschnittsform des Durchlasses vorgesehen sein, beispielsweise ein elliptischer Querschnitt oder ein kreisrunder Querschnitt mit Vorsprüngen, die sich in Form von Rippen achsparailel entlang der Durchlaßwandung erstrecken, so daß sich das im Einsatz erzeugte Gewinde auf diese Rippen beschränkt, das Gewindeeinbringen aber erleichtert wird.

Bevorzugt wird für den Einsatz eine nicht aushärtbare oder eine naturharte bzw. kalt aushärtbare Aluminiumlegierung mit einer Härte < 90 HB, während die Schraube aus einer warm aushärtbaren Aluminiumlegierung mit einer Härte > 140 HB gefertigt wird. Nimmt man als Kriterium die Zugfestigkeit Rm, so sollte die der Schraube > 450 MPa (N/mm²) sein, während für den Einsatz Rm < 300 N/mm² einzuhalten wäre. Für den Einsatz kommt insbesondere eine AlMg- oder AlMgSi-Legierung, für die Schraube eine AlZnMgCu-Legierung in Betracht.

Die Zeichnung veranschaulicht die Erfindung an einem Ausführungsbeispiel; darin zeigen
die Figuren 1 - 6 verschiedene Formen des Einsatzes im Querschnitt und der jeweiligen Ansicht A;
die Figuren 7 und 8 die Einsätze gemäß den Figuren 2 und 4 im eingebauten Zustand; und
die Figuren 9 und 10 die Befestigung eines Flachprofils an einem Bauteil vor und nach dem Eindrehen einer Schraube in den Einsatz.

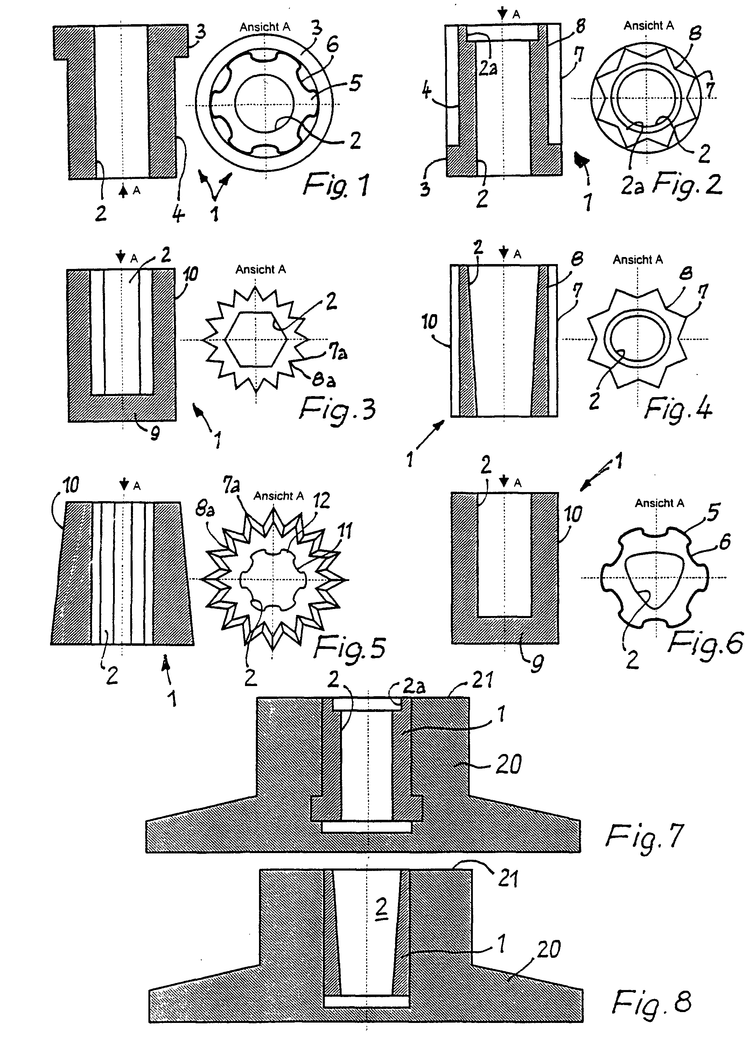

Der in Fig. 1 dargestellte, im ganzen mit 1 bezeichnete Einsatz hat einen zylindrischen, im Querschnitt also kreisförmigen Durchlaß 2. Außenseitig ist an seinem einen Ende ein zylindrischer Kragen 3 ausgebildet, während seine Außenkontur über den Rest seiner Länge, also im Bereich 4, im Querschnitt ein Außensechsrund-Profil mit Rippen 5 und Nuten 6 aufweist.

Der in Fig. 2 dargestellte Einsatz 1 hat ebenfalls einen zylindrischen Durchlaß 2, der jedoch an einem Ende über einen kurzen Längenabschnitt zu einem Freischnitt 2a aufgeweitet ist. Außenseitig ist am anderen Ende ein zylindrischer Abschnitt 3 vorgesehen, während im Bereich 4 ein Vielzahn-Profil mit Spitzen 7 und Tälern 8 ausgebildet ist.

Der Durchlaß 2 des Einsatzes 1 gemäß Fig. 3 ist an seinem einen Ende durch einen Boden 9 verschlossen, so daß der Durchlaß 2 die Form eines Sackloches hat. Im Querschnitt ist das Sackloch sechseckförmig (Hexagon), und die Außenfläche 10 des Einsatzes 1 ist im Querschnitt zu einem Vielzahn-Profil mit Spitzen 7a und Tälern 8a geformt.

Bei dem in Fig. 4 dargestellten Einsatz 1 ist der Durchlaß 2 im Querschnitt elliptisch ausgebildet und verjüngt sich - in Einschraubrichtung - vom einen zum anderen Ende. Außenseitig bleibt das Quermaß über die Länge gleich und ist zu einem Vielzahn-Profil mit Spitzen 7 und Tälern 8 ausgeformt.

Der Einsatz 1 gemäß Fig. 5 hat einen Durchlaß 2, welcher im Querschnitt eine innensechsrundförmige Kontur mit Rippen 11 und Nuten 12 besitzt. Das Quermaß des Durchlasses 2 ist über die Länge des Einsatzes 1 gleich, während seine Außenfläche 10 sich - in Einschraubrichtung - von einem zum anderen Ende erweitert und als Vielzahn-Profil mit Spitzen 7a und Tälern 8a ausgebildet ist.

Die Quermaße des Einsatzes 1 gemäß Fig. 6 sind über seine Länge gleichbleibend, jedoch ist sein Durchlaß 2 an einem Ende durch einen Boden 9 verschlossen. Im übrigen hat der Durchlaß 2 einen trilobularen Querschnitt, während die Außenkontur 10 als Außensechsrund-Profil mit Rippen 5 und Nuten 6 ausgebildet ist.

Fig. 7 zeigt den Einsatz gemäß Fig. 2 im Einbauzustand in einem Bauteil 20, und zwar derart, daß das mit dem Freischnitt 2a versehene Ende des Einsatzes 1 mit der Oberfläche 21 des Bauteils 20 abschließt.

Fig. 8 zeigt einen ähnlichen Einbauzustand für den Einsatz 1 gemäß Fig. 4, und zwar derart, daß das Einsatzende mit dem größeren Durchmesser des Durchlasses 2 fluchtend mit der Oberfläche 21 des Bauteils 20 abschließt.

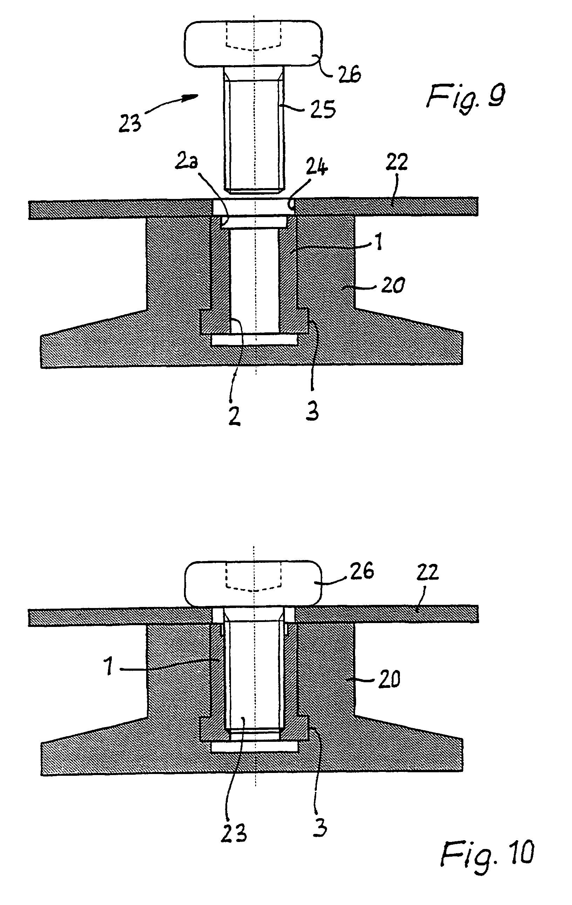

Die Fig. 9 und 10 veranschaulichen die Befestigung eines Flachprofils 22 am Bauteil 20 mit Hilfe des in diesem befestigten Einsatzes 1 und einer Schraube 23. Wird diese durch das Loch 24 in den Einsatz 1 eingeführt, furcht oder schneidet sie in dessen Durchlaß 2 ein ihrem Gewinde 25 entsprechendes Gewinde und spannt schließlich mit ihrem Kopf 26 das Flachprofil 22 auf dem Bauteil 20 fest.

## Patentansprüche

1. Schraubverbindung insbesondere für Kunststoffteile, bestehend aus einer Schraube und einem Einsatz, der in einen der Verbindungspartner verdrehsicher einzubringen ist und in einem axialen Durchlaß das Gewinde der Schraube aufnimmt,
**dadurch gekennzeichnet, dass** der Einsatz (1) aus einer Aluminiumlegierung besteht, dass der axiale Durchlaß (2; 2a) des Einsatzes (1) gewindefrei ausgebildet ist, dass auch die Schraube aus einer Aluminiumlegierung besteht, die eine wesentlich größere Härte als die Legierung des Einsatzes (1) hat, und dass die Schraube ein das Innengewinde des Einsatzes furchendes bzw. schneidendes Gewinde aufweist.

2. Schraubverbindung nach Anspruch 1,
**dadurch gekennzeichnet, dass** der Einsatz (1) aus einer naturharten oder kalt aushärtbaren Aluminiumlegierung mit einer Härte < 90 HB und die Schraube aus einer warm aushärtbaren Aluminiumlegierung mit einer Härte > 140 HB besteht.

3. Schraubverbindung nach Anspruch 1 oder 2,
**dadurch gekennzeichnet, dass** der Einsatz (1) aus einer AlMg- bzw. AlMgSi-Legierung und die Schraube aus einer AlZnMgCu-Legierung besteht.

4. Schraubverbindung nach einem der vorhergehenden Ansprüche,
**dadurch gekennzeichnet, dass** der Querschnitt des axialen Durchlasses (2) unrund ausgebildet ist.

5. Schraubverbindung nach einem der vorhergehenden Ansprüche,
**dadurch gekennzeichnet, dass** sich der Querschnitt des axialen Durchlasses (2) in Längsrichtung verjüngt.

6. Schraubverbindung nach einem der vorhergehenden Ansprüche,
**dadurch gekennzeichnet, dass** der Außenquerschnitt des Einsatzes sich axial erstreckende radiale Vorsprünge (7; 7a) hat.

7. Schraubverbindung nach einem der vorhergehenden Ansprüche,
**dadurch gekennzeichnet, dass** sich der Außenquerschnitt des Einsatzes (1) in Längsrichtung erweitert.

8. Schraubverbindung nach einem der vorhergehenden Ansprüche,
**dadurch gekennzeichnet, dass** der Einsatz (1) ein Fließpreß-Werkstück ist.

## Claims

1. Screw connection, in particular for plastic parts, comprising a screw and an insert, which is to be introduced non-rotatably into one of the parts being connected and receives the thread of the screw in an axial passage, **characterized in that** the insert (1) consists of an aluminium alloy, **in that** the axial passage (2; 2a) of the insert (1) is formed without a thread, **in that** the screw also consists of an aluminium alloy, which has a much greater hardness than the alloy of the insert (1), and **in that** the screw has a thread which gouges or cuts the internal thread of the insert.

2. Screw connection according to Claim 1, **characterized in that** the insert (1) consists of a naturally hard or cold age-hardenable aluminium alloy with a hardness < 90 HB and the screw consists of a hot age-hardenable aluminium alloy of a hardness > 140 HB.

3. Screw connection according to Claim 1 or 2, **characterized in that** the insert (1) consists of an AlMg or AlMgSi alloy and the screw consists of an AlZnMgCu alloy.

4. Screw connection according to one of the preceding claims, **characterized in that** the cross section of the axial passage (2) is of a non-round configuration.

5. Screw connection according to one of the preceding claims, **characterized in that** the cross section of the axial passage (2) decreases in the longitudinal direction.

6. Screw connection according to one of the preceding claims, **characterized in that** the outside cross section of the insert has axially extending radial projections (7; 7a).

7. Screw connection according to one of the preceding claims, **characterized in that** the outside cross section of the insert (1) enlarges in the longitudinal direction.

8. Screw connection according to one of the preceding claims, **characterized in that** the insert (1) is an extruded workpiece.

## Revendications

1. Assemblage par vis en particulier pour des pièces en matière plastique, constitué d'une vis et d'un insert qui est à placer de manière empêchant la rotation dans l'un des partenaires d'assemblage et qui reçoit dans un passage axial le filetage de la vis,
**caractérisé en ce que** l'insert (1) est constitué d'un alliage d'aluminium, que le passage axial (2 ; 2a) de l'insert (1) est réalisé sans filetage, que la vis également est constituée d'un alliage d'aluminium qui a une dureté nettement plus grande que l'alliage de l'insert (1), et que la vis présente un filetage réalisant le taraudage de l'insert par déformation ou par découpe.

2. Assemblage par vis selon la revendication 1,
**caractérisé en ce que** l'insert (1) est constitué d'un alliage naturellement dur ou durcissable à froid d'une dureté < 90 HB et la vis d'un alliage d'aluminium durcissable à chaud d'une dureté > 140 HB.

3. Assemblage par vis selon la revendication 1 ou 2,
**caractérisé en ce que** l'insert (1) est constitué d'un alliage de AlMg ou AlMgSi et la vis d'un alliage de AlZnMgCu.

4. Assemblage par vis selon l'une des revendications précédentes,
**caractérisé en ce que** la section transversale du passage axial (2) est réalisée non ronde.

5. Assemblage par vis selon l'une des revendications précédentes,
**caractérisé en ce que** la section transversale du passage axial (2) se réduit dans la direction longitudinale.

6. Assemblage par vis selon l'une des revendications précédentes,
**caractérisé en ce que** la section transversale extérieure de l'insert présente des saillies (7 ; 7a) s'étendant axialement.

7. Assemblage par vis selon l'une des revendications précédentes,
**caractérisé en ce que** la section transversale extérieure de l'insert (1) s'élargit dans la direction longitudinale.

8. Assemblage par vis selon l'une des revendications précédentes,
**caractérisé en ce que** l'insert (1) est une pièce filée.
